# EUROPEAN PATENT SPECIFICATION

(11) **EP 4 117 481 B1**
(45) Date of publication and mention of the grant of the patent: **28.01.2026**
(21) Application number: 21768897.7
(22) Date of filing: 10.03.2021
(51) Int. Cl.: A44C 5/14, A44C 5/00, G04B 47/04, H05K 5/03

(54) **ACCESSORY ATTACHMENT APPARATUS AND METHODS RELATED THERETO**
ZUBEHÖRBEFESTIGUNGSVORRICHTUNG UND ZUGEHÖRIGE VERFAHREN
APPAREIL DE FIXATION D'ACCESSOIRES ET PROCÉDÉS ASSOCIÉS

(30) Priority: 13.03.2020 US 202016817995
(43) Date of publication of application: 18.01.2023
(73) Proprietor: Interlokit Inc., Atlanta, Georgia 30342 (US)
(72) Inventor: DIMEGLIO, Dawn, Atlanta, Georgia 30342 (US)
(74) Representative: Wächter, Jochen
(86) International application number: PCT/US2021/021606
(87) International publication number: WO 2021/183589

(56) References cited:
- EP-B1- 1 378 185
- US-A- 2 065 657
- US-A- 5 363 351
- US-A- 5 483 505
- US-A1- 2012 085 129
- US-A1- 2015 040 358
- US-A1- 2016 255 923
- US-A1- 2016 274 549
- US-A1- 2018 055 159
- US-A1- 2019 155 222
- US-A1- 2020 015 555
- US-B1- 10 261 547

## Description

### FIELD OF THE DISCLOSURE

The present disclosure relates generally to accessory attachment apparatuses. Particularly, embodiments of the present disclosure relate to accessory attachment apparatuses for wearable and smart accessories.

### BACKGROUND

Wearable accessories were once mere tools for providing or enhancing the style or functionality of a user's attire. However, with the growth in popularity and necessity of smart devices over the years, wearable accessories are now being used to house these smart devices on a user's person while also enhancing style. Smart devices enable users to answer calls, check text messages and emails, track fitness progress, and monitor health. Accordingly, to merge the style and function aspects of wearable accessories with the utility of smart devices, there are now stylish accessories in assorted colors and high-end finishes to store these devices that are highly coveted and wildly popular amongst consumers. In addition, conventional watches have been used as wearable accessories. US 2 065 657 A discloses the preamble of claim 1. It discloses an adapter for a wristwatch for using the watch as a pocket or pendant watch. The watch comprises a watch case and tabs extending therefrom. The adapter comprises two adapter members which can be attached by means of respective spring bars to the tabs of the watch case. One of the adapter members is provided with an eyelet and a ring which serves as a coupler. EP 1 378 185 B1 and US 5 363 351 A each disclose a conventional wristwatch comprising a watch case and a wristband. The wristband is attached to the watch case by means of two spring bars.

A wearable consumer product, such as a smart device, may be attached to a user in a variety of manners. Many traditional systems for attaching a consumer product to a user may be difficult or cumbersome. Additionally, traditional systems may attach a consumer product to a user in a manner that is not aesthetically pleasing. Generally, the casing and the band or components thereof, or the band and the buckle or other ornamental parts are connected together by means of connecting means comprising pins and C-rings. In connecting or disconnecting such ornamental parts, tools suited for such connecting devices are used. Any person who wants to quickly change the band of a wearable accessory according to the occasion or increase or decrease the size of the accessory has to ask the skilled accessory-maker to make the desired change. If inexperienced persons make such changes on their own, there is the risk of damaging ornamental parts.

What is needed, therefore, are accessory attachment apparatuses that can allow users to quickly and more practically interact with smart devices while improving the ease of use and customizability of the accessories to the user. Embodiments of the present disclosure address this need as well as other needs that will become apparent upon reading the description below in conjunction with the drawings.

### BRIEF SUMMARY

Some wearers of accessories such as smart devices wish to easily customize and interchange portions of the accessories on a regular basis. For example, users may wish to customize an accessory for exercising and further customize the accessory the same day for a formal event. Additional layers of customization can also allow for enhanced protection and/or concealment of such accessories, increasing privacy for user authentication and protection from external forces. It is an object of the present disclosure to provide such apparatuses and methods.

The invention is set out in the appended set of claims.

### BRIEF DESCRIPTION OF THE DRAWINGS

The accompanying drawings, which are incorporated in and constitute a part of this specification, illustrate multiple embodiments of the presently disclosed subject matter and serve to explain the principles of the presently disclosed subject matter. The drawings are not intended to limit the scope of the presently disclosed subject matter in any manner.
FIG. 1 illustrates a perspective exploded view of an accessory attachment apparatus in accordance with some examples of the present disclosure.
FIG. 2 illustrates a perspective view of an accessory attachment apparatus in accordance with some examples of the present disclosure.
FIG. 3 illustrates a perspective view of another accessory attachment apparatus in accordance with some examples of the present disclosure.
FIG. 4 illustrates a top-down view of an accessory attachment apparatus in accordance with some examples of the present disclosure.
FIG. 5 illustrates a top-down view of another accessory attachment apparatus in accordance with some examples of the present disclosure.
FIG. 6 illustrates a top-down view of another accessory attachment apparatus in accordance with some examples of the present disclosure.
FIG. 7 illustrates an accessory attachment apparatus with one or more accessories in accordance with some examples of the present disclosure.
FIG. 8 illustrates an accessory attachment apparatus with one or more accessories in accordance with some examples of the present disclosure.
FIG. 9 illustrates an accessory attachment apparatus with one or more accessories in accordance with some examples of the present disclosure.
FIG. 10 illustrates an accessory attachment apparatus with one or more accessories in accordance with some examples of the present disclosure.
FIG. 11 illustrates an accessory attachment apparatus with one or more accessories in accordance with some examples of the present disclosure.
FIG. 12 illustrates an accessory attachment apparatus with one or more accessories in accordance with some examples of the present disclosure.
FIG. 13 illustrates a perspective view of an accessory attachment apparatus in accordance with some examples of the present disclosure.
FIG. 14 illustrates a perspective view of another accessory attachment apparatus in accordance with some examples of the present disclosure.
FIG. 15 illustrates a perspective view of another accessory attachment apparatus in accordance with some examples of the present disclosure.
FIG. 16 illustrates a perspective view of another accessory attachment apparatus in accordance with some examples of the present disclosure.
FIG. 17 illustrates a perspective view of another accessory attachment apparatus alongside an exploded view of the same in accordance with some examples of the present disclosure.

### DETAILED DESCRIPTION

The present disclosure describes apparatuses and methods related to an attachment apparatus for a consumer accessory. The attachment apparatus may attach a consumer accessory to a user. In one instance, this can include attaching a wearable device (e.g., including an electronic or non-electronic device) to the wrist of a user.

The attachment apparatus may be used as an accessory for a user. In one implementation, the attachment apparatus may be interchangeable with a variety of consumer accessories. This may allow the attachment apparatus to be used with an ecosystem of consumer accessories that includes a common engagement structure. The common engagement structure may be configured for removable engagement with any one of a group of attachment apparatuses described herein. Accordingly, the group of attachment apparatuses may be interchangeable with the ecosystem of consumer accessories. In this manner, different ones of the group of attachment apparatuses may be interchanged with a given consumer product based on a user's preferences.

Although certain embodiments of the disclosure are explained in detail, it is to be understood that other embodiments are contemplated. Accordingly, it is not intended that the disclosure is limited in its scope to the details of construction and arrangement of components set forth in the following description or illustrated in the drawings. Other embodiments of the disclosure are capable of being practiced or carried out in various ways. Also, in describing the embodiments, specific terminology will be resorted to for the sake of clarity. It is intended that each term contemplates its broadest meaning as understood by those skilled in the art and includes all technical equivalents which operate in a similar manner to accomplish a similar purpose.

Herein, the use of terms such as "having," "has," "including," or "includes" are open-ended and are intended to have the same meaning as terms such as "comprising" or "comprises" and not preclude the presence of other structure, material, or acts. Similarly, though the use of terms such as "can" or "may" are intended to be open-ended and to reflect that structure, material, or acts are not necessary, the failure to use such terms is not intended to reflect that structure, material, or acts are essential. To the extent that structure, material, or acts are presently considered to be essential, they are identified as such.

By "comprising" or "containing" or "including" is meant that at least the named compound, element, particle, or method step is present in the composition or article or method, but does not exclude the presence of other compounds, materials, particles, method steps, even if the other such compounds, material, particles, method steps have the same function as what is named.

It is also to be understood that the mention of one or more method steps does not preclude the presence of additional method steps or intervening method steps between those steps expressly identified.

The components described hereinafter as making up various elements of the disclosure are intended to be illustrative and not restrictive. Many suitable components that would perform the same or similar functions as the components described herein are intended to be embraced within the scope of the disclosure. Such other components not described herein can include, but are not limited to, for example, similar components that are developed after development of the presently disclosed subject matter.

As used herein, the term "about" should be construed to refer to both of the numbers specified as the endpoint (s) of any range. Any reference to a range should be considered as providing support for any subset within that range. Ranges may be expressed herein as from "about" or "approximately" or "substantially" one particular value and/or to "about" or "approximately" or "substantially" another particular value. When such a range is expressed, other exemplary embodiments include from the one particular value and/or to the other particular value. Further, the term "about" means within an acceptable error range for the particular value as determined by one of ordinary skill in the art, which will depend in part on how the value is measured or determined, i.e., the limitations of the measurement system. For example, "about" can mean within an acceptable standard deviation, per the practice in the art. Alternatively, "about" can mean a range of up to ±20%, preferably up to ±10%, more preferably up to ±5%, and more preferably still up to ±1% of a given value. Alternatively, particularly with respect to biological systems or processes, the term can mean within an order of magnitude, preferably within 2-fold, of a value. Where particular values are described in the application and claims, unless otherwise stated, the term "about" is implicit and in this context means within an acceptable error range for the particular value.

Throughout this disclosure, various aspects of the invention can be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual rational numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual rational numbers within that range, for example, 1, 2, 2.7, 3, 4, 5, 5.3, and 6. This applies regardless of the breadth of the range.

Reference will now be made in detail to exemplary embodiments of the disclosed technology, examples of which are illustrated in the accompanying drawings and disclosed herein. Wherever convenient, the same references numbers will be used throughout the drawings to refer to the same or like parts.

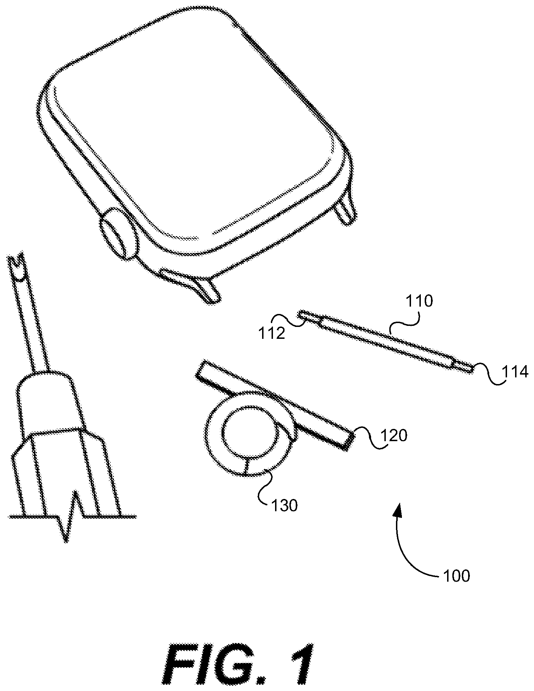

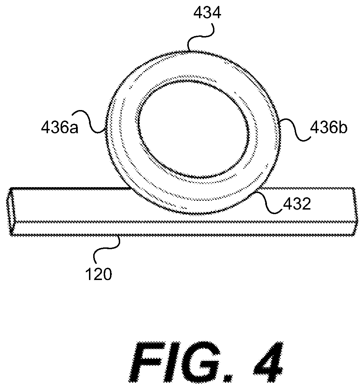

As shown in FIG. 1, the accessory attachment apparatus 100 comprises a spring bar 110, a spring bar housing 120, and a coupler 130. The spring bar 110 has a first end 112 and a second end 114. Each of the first and second end includes a first and second depressible tip, respectively. It is understood that the spring bar 110 can include structures similar to watch lugs, watch pins, bars, or other fasteners. The coupler 130 is disposed on an outer surface of the spring bar housing 120. The coupler 130 includes an abutting segment communicating with the spring bar housing 120, a distal segment positioned opposite the abutting segment, and a first and second spanning segment configured to span the abutting and distal segments. Further examples of the coupler 130 are shown in greater detail in FIG. 4. The coupler 130 has an outer size. The attachment of the first and second spanning segments to the distal segment defines an interior space of the coupler 130, and the interior space corresponds to an inner size of the coupler 130.

As used herein, unless otherwise stated, the term "size" refers to the largest perimeter length around the corresponding object. For example, if the coupler 130 is circular, the "inner size" of the coupler 130 refers to the inner circumference of the coupler 130. Alternatively, if the coupler 130 is rectangular, the "inner size" of the coupler 130 refers to the inner perimeter of the coupler 130. The aforementioned definition of the term "size" is understood to be applied to any of the components as described herein.

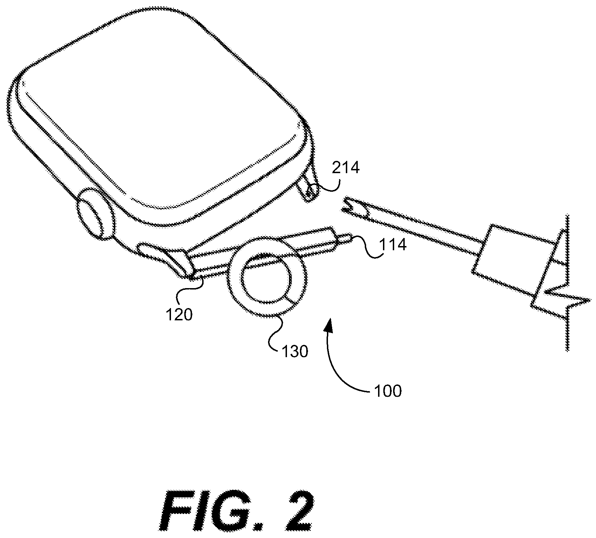

As shown in FIG. 2, the spring bar housing 120 has an interior channel to contain the spring bar 110. The interior channel has an inner size greater than an outer size of the spring bar 110. The spring bar housing 120 is configured to hinge freely around the spring bar 110 without substantial interference. In other examples, the spring bar housing 120 can be configured to contact the spring bar 110 to prevent free movement. Additionally, the spring bar housing 120 leaves the first and second ends of the spring bar 110 substantially exposed such that the first and second depressible tips can communicate with a first and second recess, respectively.

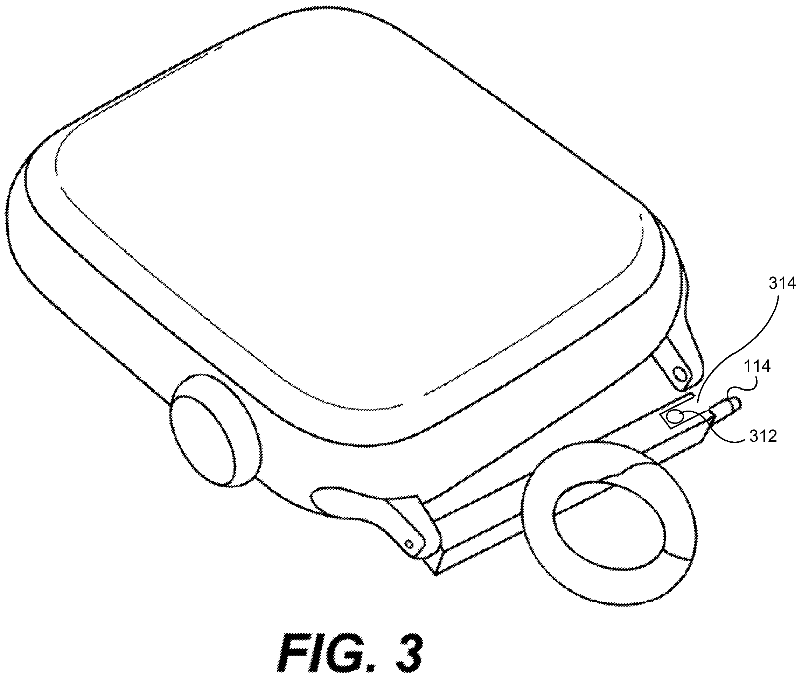

As illustrated in FIG. 3, the spring bar 110 can further comprise a raised detent 312 disposed on the outer surface of the spring bar 110. The raised detent can be positioned proximal one of the first and second ends and connected to the corresponding depressible tip. The raised detent can be configured to have a range of movement for depressing the depressible tip to which it is connected. In other words, a user can utilize the raised detent to aid in contacting one of the depressible tips with one of the corresponding recesses. The spring bar housing 120, accordingly, can further comprise a guide slot 314 configured to receive the raised detent 312 when the spring bar housing 120 is containing the spring bar 110. The guide slot 314 can allow the raised detent 312 a range of movement. The guide slot 314 can also contact the raised detent 312 such that the spring bar 110 is rotably locked in position by the raised detent 312 such that the spring bar 110 and spring bar housing 120 can move in concert with one another.

FIG. 4 illustrates another view of the spring bar housing 120 and the coupler 130. Although FIG. 4 is illustrated with a substantially circular coupler 130, the coupler 130 can have other shapes. The coupler 130 can include any shape having at least an abutting segment 432 in contact with the spring bar housing 120, a distal segment 434 opposite the abutting segment, and at least two spanning segments 436a and 436b spanning the distal segment 434 and the abutting segment 432.

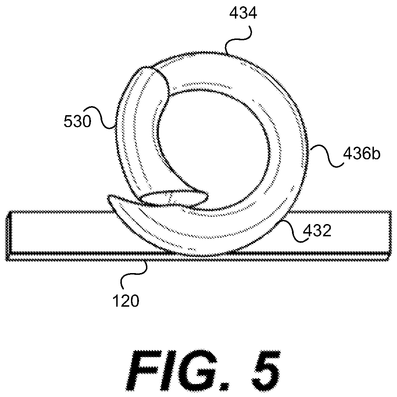

As shown in FIG. 5, the coupler 130 can further comprise a latch 530 configured to hingedly communicate with the coupler 130. The latch 530 can have an open configuration (illustrated in FIG. 5) and a closed configuration (substantially similar to the configuration of FIG. 4). As shown, the open configuration can create an opening to the interior space of the coupler 130. The latch 530 can include a spring to transition the latch 530 from the open configuration to the closed configuration. The latch 530 can also include other mechanisms to transition the latch 530 from the open configuration to the closed configuration, such as spring ring clasps, lobster clasps, barrel clasps, magnetic clasps, and the like. A user of the accessory attachment apparatus 100 can apply a force to the latch 530 to transition the latch 530 to the open configuration as needed. In such a manner, the spring can lock the latch 530 in the closed position and provide a secure attachment mechanism to the coupler 130.

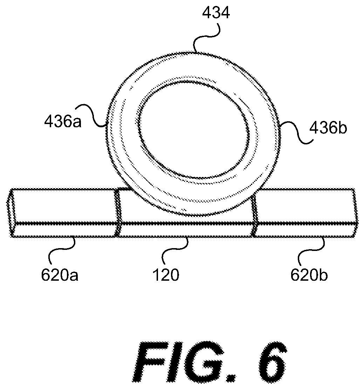

As shown in FIG. 6, the spring bar housing 120 can further include one or more detachable sections 620a and 620b. The one or more detachable sections 620a and 620b can detachably attach from one another. This can allow a user of the apparatus to further customize the spring bar housing 120. If the user wishes to reveal more of the spring bar 110, for example, the user can remove the one or more detachable sections 620a and 620b. In some examples, the one or more detachable sections 620a and 620b can be a different shape than the spring bar housing 120 to differentiate the detachable sections 620a and 620b from the spring bar housing 120. In other examples, the detachable sections 620a and 620b can be the same shape as the spring bar housing 120 to create a uniform figure. The detachable sections 620a and 620b can have an inner size similar to the inner size of the spring bar housing 120. The detachable sections 620a and 620b can also comprise the guide slot 314 for receiving the raised detent.

One or more components of the accessory attachment apparatus 100 can comprise most generally all metals and alloys thereof now known or later developed or discovered, including, but not limited to copper, stainless steel, platinum, silver, gold, gold plated, pewter, aluminum, tungsten, titanium, and/or any combination thereof. Alternatively, or additionally, the accessory attachment apparatus 100 can comprise polymers including, but not limited to plastic and rubber, ceramic, wood, glass, any material now known or later discovered or developed used to make jewelry and related accessories, and/or any combination thereof. Other materials can be included in the accessory attachment apparatus 100, such as any suitable material now known or later discovered, including but not limited to polymer material, aluminum, wood, ceramic, stainless steel, and/or any combinations thereof. The one or more components of the accessory attachment apparatus 100 can comprise substantially similar materials. Alternatively, the one or more components of the accessory attachment apparatus 100 can comprise substantially different materials. For example, the spring bar 110 can comprise a metal alloy for rigidity and the spring bar housing 120 can comprise a polymer for durability.

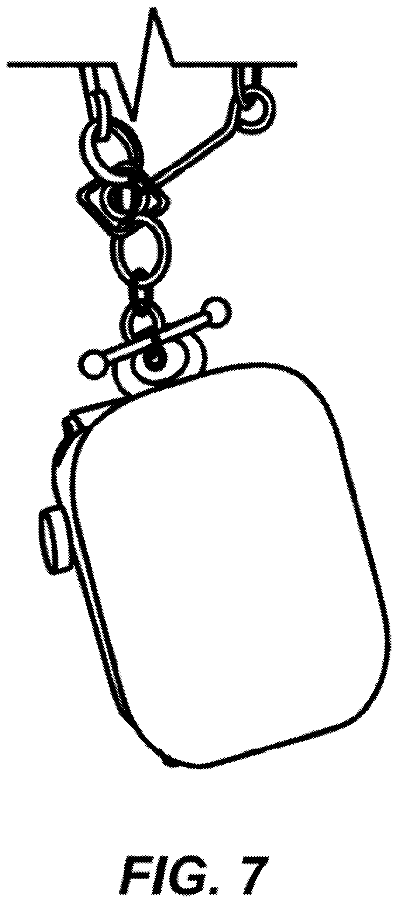

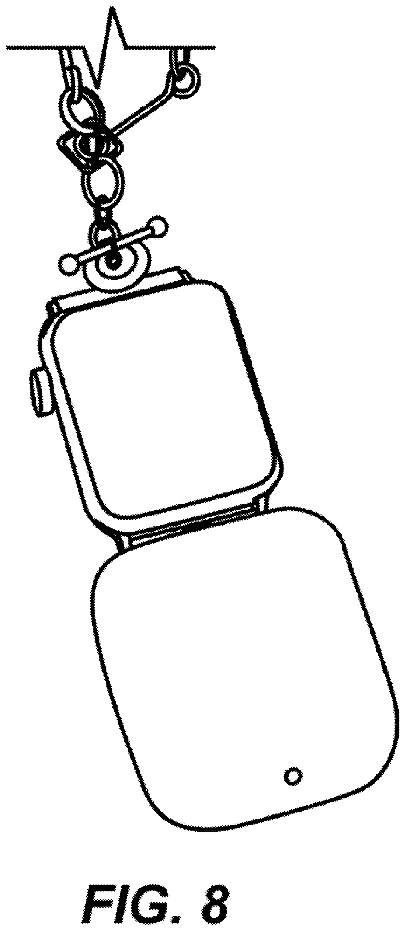

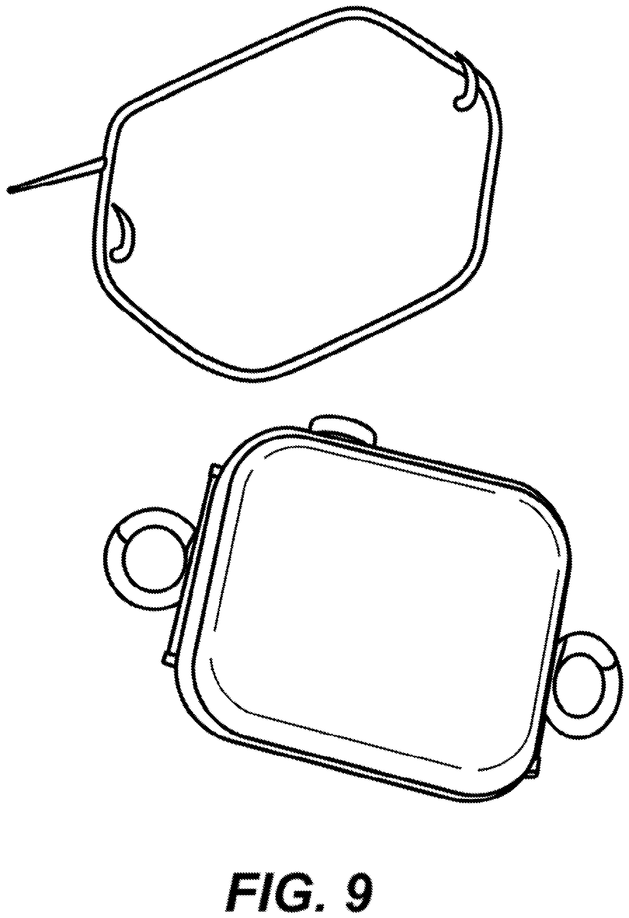

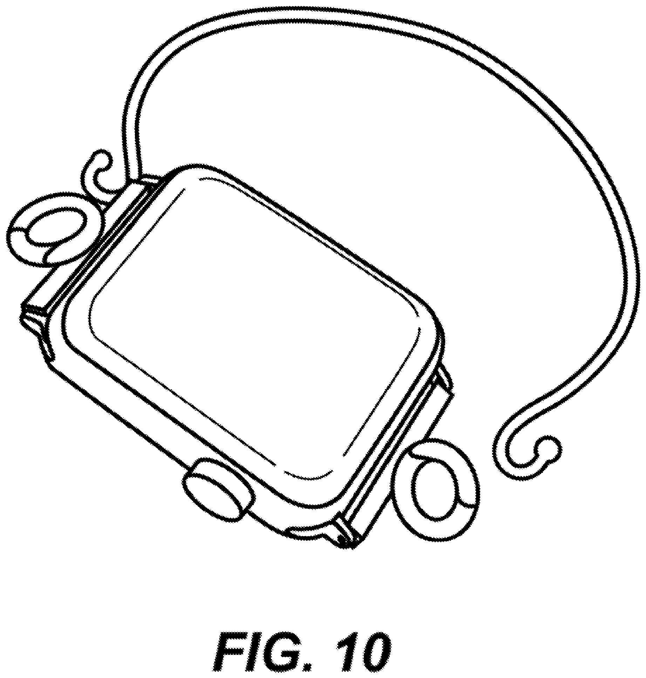

The coupler 130 can be attached to one or more accessories. The one or more accessories can include stylistic or fashion accessories, such as a necklace, a bracelet, a cuff bracelet, a choker, a headband, a pendant, a charm bracelet, a brooch, a watch band, a pocket watch attachment, a chain, a locket, a lanyard, a pin, a patch, a helmet, a hat, a visor, a vest, a tie clip, a hook, a cord, a strap, a belt, a button, a hook-and-loop fastener, a magnet, a ring, a zipper, a bag and/or a purse, a scarf, gloves and other clothing items, and the like. For example, as shown in FIG. 7 and FIG. 8, the one or more accessories can comprise a necklace and a protective cover. In other examples, as shown in FIG. 9, the one or more accessories can comprise a brooch. Alternatively, or additionally, as shown in FIG. 10, the one or more accessories can comprise a bracelet.

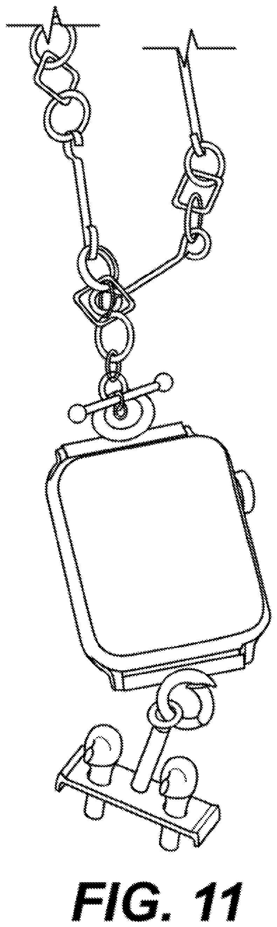

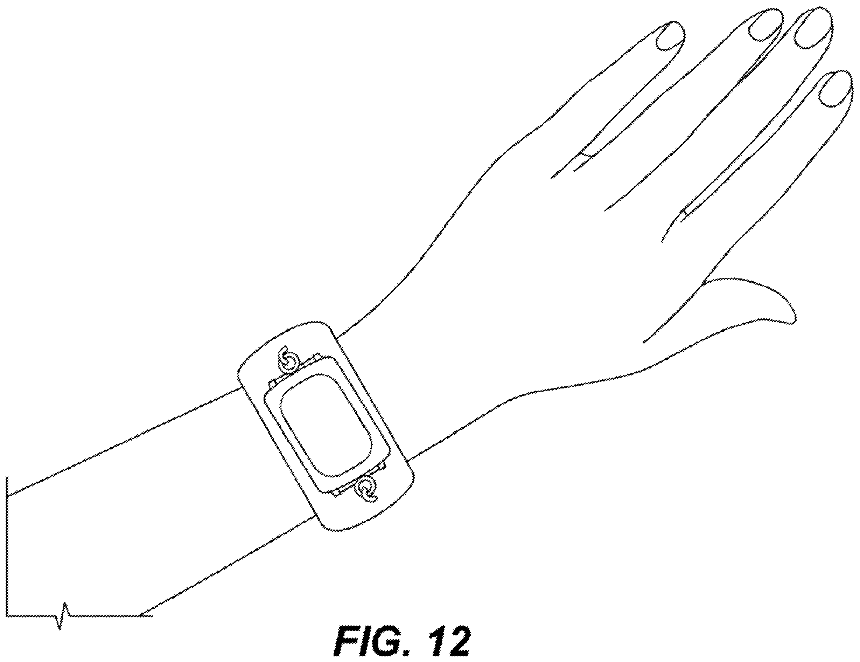

The one or more accessories can also include functional or utilitarian accessories, such as a key fob, a key chain, a badge, a nametag, an ear bud or headphone holder, cufflink holder, glasses holder, cuffs, a picture frame, a padlock or other lock, a cable organizer, a portable battery, a protective cover which can be clear or opaque, a pill receptacle, a currency receptacle, a key receptacle, a fold-out photo album, one or more specialized sensors such as a glucose monitor, a charging mechanism, and the like. For example, as shown in FIG. 11, the one or more accessories can comprise an ear bud holder in addition to a necklace. Alternatively, or additionally, as shown in FIG. 12, the one or more accessories can comprise a cuff or wristband.

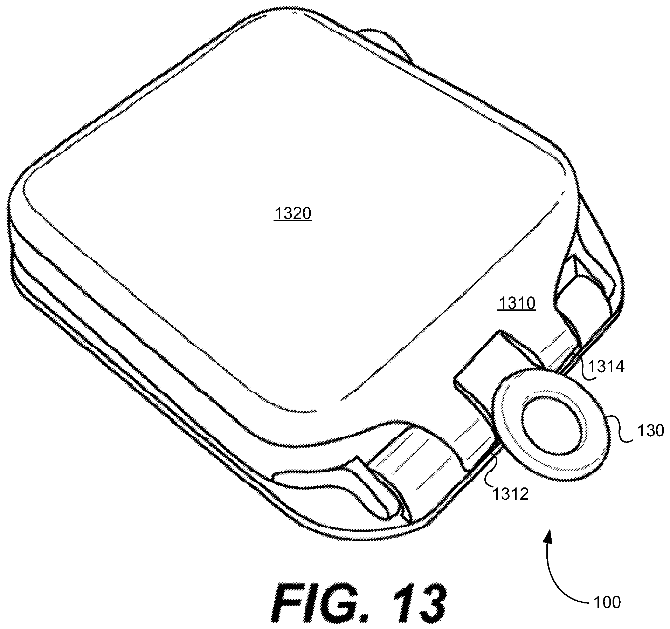

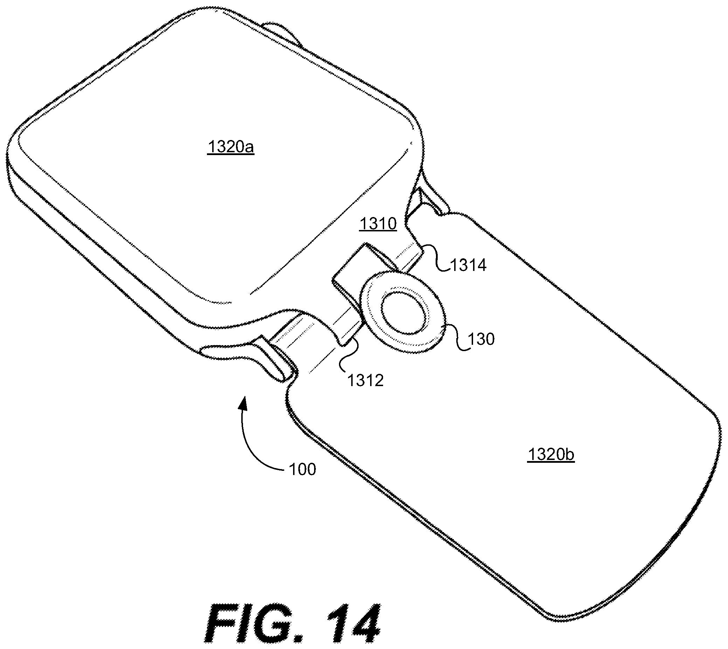

As shown in FIG. 13 and FIG. 14, in addition to the previously described components of the accessory attachment apparatus 100, the accessory attachment apparatus further includes a hinge 1310. The hinge 1310 has a first prong 1312 positioned proximate one of the first and second ends of the spring bar 110. The first prong 1312 is configured to detachably attach to and hinge on the spring bar 110. In other words, the first prong 1312 can rotably engage the spring bar 110. Alternatively, the first prong 1312 can be affixed to the spring bar 110 such that it is not capable of rotation without also rotating the spring bar 110. The first prong 1312 is configured to abut the spring bar housing 120. Alternatively, the first prong 1312 can be substantially separated from the spring bar housing 120.

The hinge 1310 further has a second prong 1314 positioned distal the first prong 1312. The second prong 1314 can be positioned on an opposite end of the spring bar 110 from the first prong 1312. The second prong 1314 can be configured to detachably attach to and hinge on the spring bar 110. In other words, the second prong 1314 can rotably engage the spring bar 110. Alternatively, the second prong 1314 can be affixed to the spring bar 110 such that it is not capable of rotation without also rotating the spring bar 110. The second prong 1314 can also be configured to abut the spring bar housing 120. In such a manner, the spring bar housing 120 can be "straddled" on either side by the first 1312 and second 1314 prongs such that the lateral movement of the spring bar housing 120 is constricted.

The first and second prongs 1312 and 1314 can be configured to hook onto the spring bar 110 such that the prongs can freely rotate around the spring bar 110 without being interfered with by the spring bar 110. The first and second prongs 1312 and 1314 can alternatively be configured to latch or clip onto the spring bar 110 such that the prongs rotate in conjunction with the spring bar 110. Because the spring bar 110 can be configured to freely rotate within the spring bar housing 120, the prongs can also rotate with the spring bar 110 while abutting the spring bar housing 120. Alternatively, each of the prongs can comprise holes configured to have the spring bar 110 inserted therethrough. In such a manner, the prongs can be rotably fastened to the spring bar 110.

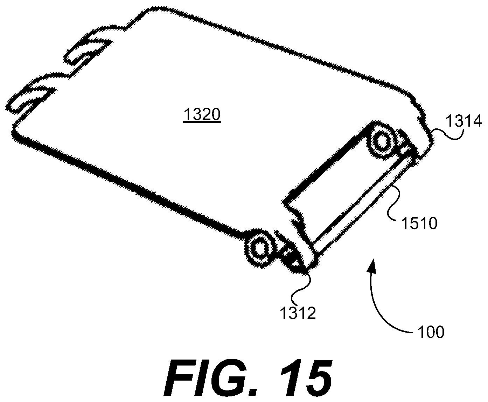

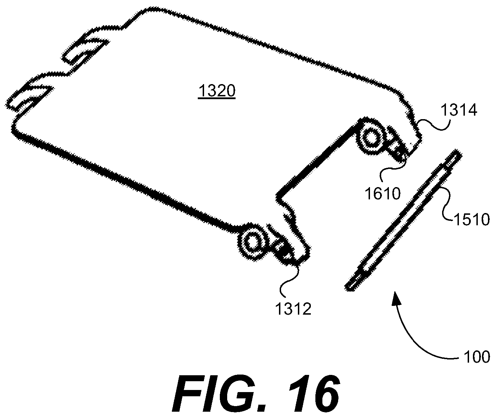

FIG. 15 and FIG. 16 illustrate additional functionality of the hinge 1310. In some examples, the first and/or second prongs 1312 and 1314 can include individual spring bar housings sharing a longitudinal axis. The first and second prongs 1312 and 1314 can then be disposed on an external surface of each individual spring bar housing. In some examples, the first and/or second prongs 1312 and 1314 can comprise an additional attachment point 1610 for attaching additional accessories. For instance, the additional attachment point 1610 can include receptables for a second spring bar 1510. The additional attachment point 1610 can also include recesses to receive the second spring bar 1510. The additional attachment point 1610 can include a variety of attachments. The second spring bar 1510 can span the first and second prongs 1312 and 1314, and the second spring bar 1510 can be used to attach additional components and accessories as disclosed herein. For example, the second spring bar 1510 can attach to a second hinge include a second sheath and/or frame.

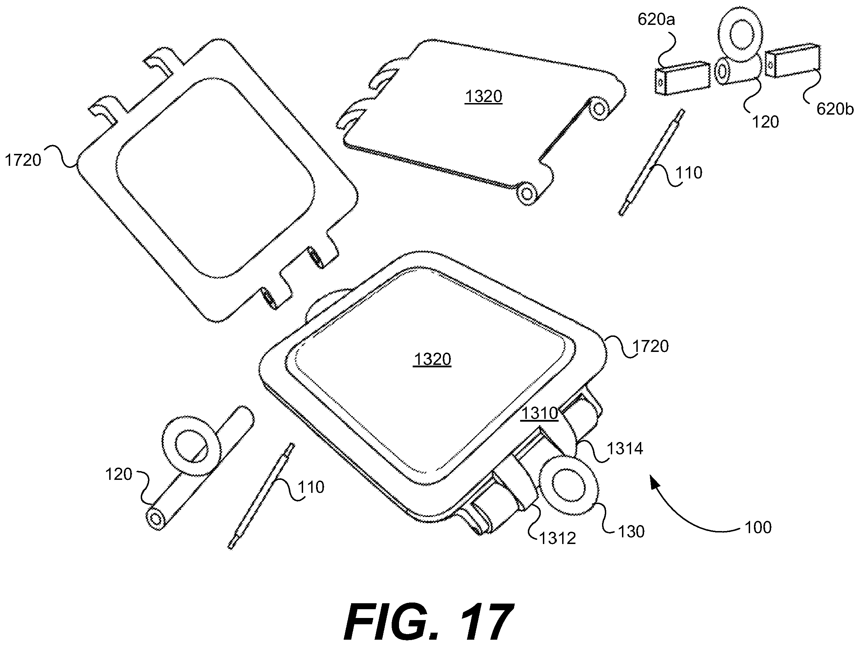

Also as shown, the hinge 1310 further includes a sheath 1320 attached to the hinge 1310 and extending away from the prongs. The sheath 1320 has a front face and a back face. The sheath 1320 can be clear or opaque. The hinge 1310 can also include a frame 1720 attached to the hinge 1310 and extending away from the prongs. An example of a frame 1720 is shown in greater detail in FIG. 17. The frame 1720 can define an aperture in the interior of the frame 1720, and the frame 1720 can have a front face and a back face as well. The frame 1720 can be configured to contain the sheath 1320 in the aperture such that the sheath 1320 is contained on one or more sides by the frame 1720. The frame 1720 can also be substantially coplanar with the sheath 1320. Any number of sheaths and/or frames can be used in conjunction with one another in the accessory attachment apparatus 100. For example, the accessory attachment apparatus 100 can include a first sheath 1320a and a second sheath 1320b.

The sheath and/or the frame can include surface ornamentation. The sheath and/or the frame can therefore have decorative or aesthetic properties to ensure that the accessory attachment apparatus 100 is visually appealing. The surface ornamentation can include labeling, set stones, enameling, textured and etched designs, fused metal embellishments, and the like. The frame and/or the sheath can be removably attachable with the hinge 1310 and/or the accessory attachment apparatus 100 such that one or more decorative elements can be interchanged for another decorative element.

The sheath and/or frame can also include utility functionalities. For instance, the sheath and/or frame can include a specialized sensor, such as a glucose monitor. Other specialized sensors can be included in the sheath and/or frame, such as a shock sensor, a location tracker, an audio sensor, and the like. The sheath and/or frame can also include utility attachments. For example, the sheath and/or frame can include magnets or can have magnetic properties, e.g., in order to provide a secondary attachment mechanism.

The sheath and/or the frame can also have protective qualities. For example, the sheath can comprise a shatterproof material to prevent breaking in case of being dropped. Alternatively, or additionally, the sheath can protect against scars and scratches. The sheath and/or the frame can comprise most generally all metals and alloys thereof now known or later developed or discovered, including, but not limited to copper, stainless steel, platinum, silver, gold, gold plated, pewter, aluminum, tungsten, titanium, and/or any combination thereof. Alternatively, or additionally, the sheath and/or frame can comprise polymers including, but not limited to plastic and rubber, ceramic, wood, glass, any material now known or later discovered or developed used to make jewelry and related accessories, and/or any combination thereof. Other materials can be included in the sheath and/or the frame, such as any suitable material now known or later discovered, including but not limited to polymer material, aluminum, wood, ceramic, stainless steel, and/or any combinations thereof. The sheath and the frame can comprise substantially similar materials. Alternatively, the sheath and the frame can comprise substantially different materials. For example, the sheath can comprise a polymeric anti-scratch material while the frame can comprise an etched metal alloy material. Additionally, the sheath and/or frame can further comprise bumpers, pads, a combination thereof, and the like configured to protect the smart device or smart device components from other types of damage.

The sheath and/or the frame can be configured to contact and be in communication with a smart device. The smart device can include a back side and a user interface side. The sheath is configured to contact and be disposed on either the back side or the user interface side. For instance, if the sheath comprises a scratch-proof protective cover, the sheath can be disposed on the user interface side to protect the smart device against damage from scratches, cracks, glass fractures, and the like. In some examples, the smart device can be a smart watch, such as an APPLE WATCH^{®}, a tracking device, such as an employee tracking device, a heart monitoring device, camera, computer, a phone, a walkie-talkie, a radio, a panic button, a recording device, the like, or combinations thereof. In such a manner, the frame can be generally recessed or sufficiently recessed to receive and hold the smart device or smart device components. The sheath is recessed to receive and hold the smart device.

In some examples, the frame and/or sheath can be any height and/or any width suitable to accommodate the smart device or related smart devices components. In some examples, the frame and/or sheath can be any height and/or any width suitable to at least partially house the smart device. In some examples, the frame and/or sheath can have a height of from 1mm to 100mm (e.g., from 1mm to 95 mm, from 5mm to 90mm, from 5mm to 85mm, from 10mm to 80mm, from 15mm to 70mm, from 20mm to 60mm, from 30mm to 55mm, from 35mm to 50mm, from 35mm to 45mm, from 35mm to 40mm, from 40mm to 50mm, or from 45mm to 50mm). In some examples, the frame and/or sheath can have a width of from 5mm to 100mm (e.g., from 10mm to 80mm, from 15mm to 70mm, from 20mm to 60mm, from 30mm to 55mm, from 35mm to 50mm, from 35mm to 45mm, from 35mm to 40mm, from 40mm to 50mm, or from 45mm to 50mm).

In some examples, the smart device can comprise the one or more recesses for receiving the first and second ends of the spring bar 110. In such a manner, the accessory attachment apparatus 100 can be securely attached to the smart device. As shown in FIG. 17, the various components of the accessory attachment apparatuses disclosed herein can be used in conjunction with or separately from one another. FIG. 17, for example, illustrates an accessory attachment apparatus 100 having a spring bar 110, a spring bar housing 120, and a hinge 1310 including a frame 1720 and a sheath 1320. One or more sheaths can be included to substantially enclose the smart device, illustrated by a front sheath 1320 and a back sheath (not shown).

The one or more detachable sections 620a and 620b can be detached from the spring bar housing 120, and the spring bar 110 can inserted through the spring bar housing 120. The sheath 1320 and the frame 1720 can also have the spring bar 110 inserted therethrough via the hinge 1310. Specifically, the spring bar 110 can be inserted through the first and second prongs 1312 and 1314 of the frame 1720 and/or the sheath 1320. The coupler 130 can remain exposed to allow for additional accessories to be attached to the accessory attachment apparatus 100. The spring bar 110 can then be attached to a smart device or other accessory along with the other components through which the spring bar 110 is inserted, as shown.

The smart device in conjunction with the accessory attachment apparatus 100 can be used for functional activities. Some activities that can be tracked with the smart device and accessory attachment apparatus 100 can include tracking attendance, overtime, performance, labor compliance, paging, employee-to-employee communication, drug and alcohol detection, employee panic function, accepting and/or processing payments, public announcements, monitoring customer transactions, glucose monitoring, safety monitoring, combinations thereof, and the like. Some daily personal and professional activities include: monitoring children's or adults' activities; monitoring temperatures in homes, cars, and the like; daycare monitoring; nursing home monitoring; location tracking; requesting and/or delivering technical support; controlling office building, house, and automobile functions (e.g. lighting, temperature, doors, and the like); remote control access; internet and cell phone use monitoring; flash light or other emergency lighting; space and proximity utilization measuring through user movement. Users who can benefit from use of the accessory attachment apparatus 100 can include police, military, healthcare employees, childcare employees, manufacturing employees, educational employees, first responders, construction workers, retail employees, banking employees, legal services employees, janitorial service employees, food service employees, and the like.

Certain embodiments and implementations of the disclosed technology are described above with reference to block and flow diagrams of systems and methods according to example embodiments or implementations of the disclosed technology. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, may be repeated, or may not necessarily need to be performed at all, according to some embodiments or implementations of the disclosed technology.

While the present disclosure has been described in connection with a plurality of exemplary aspects, as illustrated in the various figures and discussed above, it is understood that other similar aspects can be used or modifications and additions can be made to the described aspects for performing the same function of the present disclosure without deviating therefrom. For example, in various aspects of the disclosure, methods and compositions were described according to aspects of the presently disclosed subject matter. However, other equivalent methods or composition to these described aspects are also contemplated by the teachings herein. Therefore, the present invention is defined by the scope of the appended claims.

### Exemplary Use Case

The following exemplary use cases describe examples of a typical user flow pattern. They are intended solely for explanatory purposes and not limitation.

A user may wish to customize their Apple Watch for a special occasion. The Apple Watch can have one or more recesses for attaching accessories. The user can then insert a spring bar 110 into a spring bar housing 120 having a coupler 130. The user can also depress the depressible tips on each end of the spring bar 110 to insert the ends into the recesses in the Apple Watch. Once attached to the Apple Watch, the spring bar housing 120 may freely hinge around the spring bar 110. To protect the Apple Watch, the user can attach a protective sheath to the spring bar 110 utilizing a hinge with prongs to snap the sheath on to the spring bar 110. The prongs can attach to the spring bar 110 on either side of the spring bar housing 120 to hold the spring bar housing 120 in place. The user can also snap a decorative frame onto the spring bar 110. The decorative frame can be selected from many decorative frames if the user desires to have the accessory match a certain outfit. The sheath can be positioned to protect a back side of the Apple Watch, while the frame can be positioned to frame the user interface side of the Apple Watch and exposed for decoration. The user can then utilize the coupler 130 to attach the Apple Watch to a chain link necklace. The user can transition a latch on the coupler 130 from the closed state to the open state to insert a chain link into the interior space of the coupler 130. A spring in the latch can then transition the latch back to the closed state to affix and fasten the coupler 130 to the necklace.

## Claims

1. An accessory attachment apparatus (100) for a smart device which has a back side and a user interface side, comprising:
a spring bar (110) having a first end (112) and a second end (114), the first end (112) having a first depressible tip and the second end (114) having a second depressible tip, each of the first and second ends (112, 114) being configured to communicate with a first and second recess, respectively;
a spring bar housing (120) having an interior channel, the interior channel having an inner size greater than an outer size of the spring bar and configured to contain the spring bar, wherein the spring bar housing is configured to freely hinge around the spring bar;
a hinge (1310) comprising a first prong (1312) positioned proximate at least one of the first and the second ends (112, 114), the first prong (1312) configured to detachably attach to and hinge on the spring bar (110) and abut the spring bar housing (120), wherein the hinge (1310) further comprises a sheath (1320) attached to the hinge (1310) and extending away from the first prong (1312), the sheath (1320) having a front face and a back face, and wherein the sheath (1320) is configured to contact and be disposed on either the back side or the user interface side of the smart device; and
a coupler (130) disposed on an outer surface of the spring bar housing (120), the coupler (130) having an outer size and an inner size, the inner size defining an interior space, the coupler (130) comprising:
an abutting segment (432) in communication with the spring bar housing (120);
a distal segment (434) positioned opposite the abutting segment (432); and
a first and a second spanning segment configured to span the abutting segment (432) and the distal segment (434) and to communicate thereto, the first and second spanning segments and the distal segment (434) defining the interior space,
wherein the coupler (130) is configured to detachably attach to one or more accessories,
**characterized in that**
the sheath (1320) is recessed to receive and hold the smart device.

2. The accessory attachment apparatus (100) of claim 1, wherein the coupler (130) further comprises a latch (530) configured to hingedly communicate with the coupler (130), the latch (530) having an open configuration and a closed configuration, the open configuration creating an opening to the interior space, the latch (530) comprising a spring to transition the latch (530) from the open configuration to the closed configuration.

3. The accessory attachment apparatus (100) of claim 1, wherein the spring bar (110) further comprises a raised detent (312) disposed on an outer surface of the spring bar (110), the raised detent (312) being positioned proximal at least one of the first end (112) and the second end (114) and connected to at least one of the first and second depressible tips.

4. The accessory attachment apparatus (100) of claim 3, wherein the spring bar housing (120) further comprises a guide slot (314) configured to receive the raised detent (312).

5. The accessory attachment apparatus (100) of claim 1, further comprising a second prong (1314) positioned distal the first prong (1312) and proximate the opposite end of the spring bar (110) from the first prong (1312), the second prong (1314) configured to detachably attach to and hinge on the spring bar (110) and abut the spring bar housing (120).

6. The accessory attachment apparatus (100) of claim 1, wherein the hinge (1310) further comprises a frame (1720) attached to the hinge (1310) and extending away from the first prong (1312), the frame (1720) having a front face, a back face, and an aperture contained by the frame (1720), at least one of the front face and the back face including surface ornamentation.

7. The accessory attachment apparatus (100) of claim 6, wherein the frame (1720) is configured to contain the sheath (1320) in the aperture, and the sheath (1320) is configured to receive and communicate with a smart device having a back side and user interface side, wherein the sheath (1320) is disposed on at least one of the back side and the user interface side.

## Patentansprüche

1. Zubehörbefestigungsvorrichtung (100) für ein Smart-Gerät, das eine Rückseite und eine Benutzeroberflächenseite aufweist, umfassend:
einen Federsteg (110) mit einem ersten Ende (112) und einem zweiten Ende (114), wobei das erste Ende (112) ein erstes eindrückbares äußerstes Ende und das zweite Ende (114) ein zweites eindrückbares äußerstes Ende aufweist, wobei jedes der ersten und zweiten Enden (112, 114) dazu eingerichtet ist, jeweils mit einer ersten bzw. zweiten Vertiefung in Eingriff zu stehen;
ein Federsteggehäuse (120) mit einem Innenkanal, wobei der Innenkanal eine innere Größe aufweist, die größer ist als eine äußere Größe des Federstegs, und dazu eingerichtet ist, den Federsteg aufzunehmen, wobei das Federsteggehäuse dazu eingerichtet ist, frei um den Federsteg schwenkbar zu sein;
ein Scharnier (1310), das eine erste Lasche (1312) umfasst, die im Bereich mindestens eines der ersten und zweiten Enden (112, 114) angeordnet ist, wobei die erste Lasche (1312) dazu eingerichtet ist, lösbar an dem Federsteg (110) befestigt zu sein und an diesem zu schwenken sowie am Federsteggehäuse (120) anzuliegen, wobei das Scharnier (1310) weiterhin eine Abdeckung (1320) umfasst, die am Scharnier (1310) befestigt ist und sich von der ersten Lasche (1312) weg erstreckt, wobei die Abdeckung (1320) eine Vorderseite und eine Rückseite aufweist, und wobei die Abdeckung (1320) dazu eingerichtet ist, dass sie mit der Rückseite oder der Benutzeroberflächenseite des Smart-Geräts in Kontakt kommt und dort angeordnet ist; und
einen Koppler (130), der an einer äußeren Oberfläche des Federsteggehäuses (120) angeordnet ist, wobei der Koppler (130) eine äußere Größe und eine innere Größe aufweist, wobei die innere Größe einen Innenraum definiert, wobei der Koppler (130) umfasst:
ein anliegendes Segment (432), das mit dem Federsteggehäuse (120) in Verbindung steht;
ein distales Segment (434), das dem anliegenden Segment (432) gegenüberliegend angeordnet ist; und
ein erstes und ein zweites Bügelsegment, die dazu eingerichtet sind, sich zwischen dem anliegenden Segment (432) und dem distalen Segment (434) zu erstrecken und mit diesen in Verbindung zu stehen, wobei das erste und zweite Bügelsegment sowie das distale Segment (434) den Innenraum definieren,
wobei der Koppler (130) dazu eingerichtet ist, lösbar an einem oder mehreren Zubehörteilen befestigt zu werden,
**dadurch gekennzeichnet, dass**
die Abdeckung (1320) eine Vertiefung aufweist, um das Smart-Gerät aufzunehmen und zu halten.

2. Zubehörbefestigungsvorrichtung (100) nach Anspruch 1, wobei der Koppler (130) weiterhin ein Verschlusselement (530) umfasst, das dazu eingerichtet ist, schwenkbar mit dem Koppler (130) in Verbindung zu stehen, wobei das Verschlusselement (530) eine offene Konfiguration und eine geschlossene Konfiguration hat, wobei die offene Konfiguration eine Öffnung zu dem Innenraum bildet, und wobei das Verschlusselement (530) eine Feder umfasst, um das Verschlusselement (530) von der offenen Konfiguration in die geschlossene Konfiguration zu überführen.

3. Zubehörbefestigungsvorrichtung (100) nach Anspruch 1, wobei der Federsteg (110) weiterhin einen nach oben ragenden Rastvorsprung (312) aufweist, der an einer Außenfläche des Federstegs (110) angeordnet ist, und wobei der nach oben ragende Rastvorsprung (312) im Bereich mindestens eines des ersten Endes (112) und des zweiten Endes (114) angeordnet ist und mit mindestens einer der ersten und zweiten eindrückbaren äußersten Enden verbunden ist.

4. Zubehörbefestigungsvorrichtung (100) nach Anspruch 3, wobei das Federsteggehäuse (120) weiterhin einen Führungsschlitz (314) aufweist, der dazu eingerichtet ist, den nach oben ragenden Rastvorsprung (312) aufzunehmen.

5. Zubehörbefestigungsvorrichtung (100) nach Anspruch 1, weiterhin umfassend eine zweite Lasche (1314), die distal zur ersten Lasche (1312) und im Bereich des der ersten Lasche (1312) gegenüberliegenden Endes des Federstegs (110) angeordnet ist, wobei die zweite Lasche (1314) dazu eingerichtet ist, lösbar an dem Federsteg (110) befestigt zu werden und an diesem zu schwenken sowie am Federsteggehäuse (120) anzuliegen.

6. Zubehörbefestigungsvorrichtung (100) nach Anspruch 1, wobei das Scharnier (1310) weiterhin einen Rahmen (1720) umfasst, der am Scharnier (1310) befestigt ist und sich von der ersten Lasche (1312) weg erstreckt, wobei der Rahmen (1720) eine Vorderseite, eine Rückseite und eine vom Rahmen (1720) umfasste Öffnung aufweist, und wobei mindestens eine der Vorderseite und der Rückseite Oberflächenverzierungen hat.

7. Zubehörbefestigungsvorrichtung (100) nach Anspruch 6, wobei der Rahmen (1720) dazu eingerichtet ist, die Abdeckung (1320) innerhalb der Öffnung aufzunehmen, und wobei die Abdeckung (1320) dazu eingerichtet ist, ein Smart-Gerät mit einer Rückseite und einer Benutzeroberflächenseite aufzunehmen und mit diesem verbunden zu sein, und wobei die Abdeckung (1320) auf mindestens einer der Rückseite und der Benutzeroberflächenseite angeordnet ist.

## Revendications

1. Dispositif de fixation d'accessoires (100) pour un appareil intelligent qui comporte une face arrière et une face d'interface utilisateur, comprenant :
une barre à ressort (110) comportant une première extrémité (112) et une seconde extrémité (114), la première extrémité (112) comportant une première pointe enfonçable et la seconde extrémité (114) comportant une seconde pointe enfonçable, chacune des première et seconde extrémités (112, 114) étant configurée pour communiquer respectivement avec un premier et un second évidement ;
un boîtier de barre à ressort (120) comportant un canal intérieur, le canal intérieur ayant une taille intérieure supérieure à une taille extérieure de la barre à ressort et étant configuré pour contenir la barre à ressort, dans lequel le boîtier de barre à ressort est configuré pour pivoter librement autour de la barre à ressort ;
une charnière (1310) comprenant une première broche (1312) positionnée à proximité d'au moins l'une des première et deuxième extrémités (112, 114), la première broche (1312) étant configurée pour se fixer de manière amovible à la barre à ressort (110) et pivoter sur celle-ci et buter contre le boîtier de barre à ressort (120), dans lequel la charnière (1310) comprend en outre une gaine (1320) fixée à la charnière (1310) et s'étendant à l'écart de la première broche (1312), la gaine (1320) ayant une face avant et une face arrière, et dans laquelle la gaine (1320) est configurée pour entrer en contact avec et être disposée soit sur la face arrière, soit sur la face d'interface utilisateur de l'appareil intelligent ; et
un coupleur (130) disposé sur une surface extérieure du boîtier de la barre à ressort (120), le coupleur (130) ayant une taille extérieure et une taille intérieure, la taille intérieure définissant un espace intérieur, le coupleur (130) comprenant :
un segment d'aboutement (432) en communication avec le boîtier de barre à ressort (120) ;
un segment distal (434) positionné à l'opposé du segment d'aboutement (432) ; et
un premier et un deuxième segments de liaison configurés pour relier le segment d'aboutement (432) et le segment distal (434) et à communiquer avec ceux-ci, les premier et deuxième segments de liaison et le segment distal (434) définissant l'espace intérieur,
dans lequel le coupleur (130) est configuré pour se fixer de manière amovible à un ou plusieurs accès,
**caractérisé en ce que**
la gaine (1320) est évidée pour recevoir et maintenir le dispositif intelligent.

2. Dispositif de fixation d'accessoires (100) selon la revendication 1, dans lequel le coupleur (130) comprend en outre un loquet (530) configuré pour communiquer de manière articulée avec le coupleur (130), le loquet (530) ayant une configuration ouverte et une configuration fermée, la configuration ouverte créant une ouverture vers l'espace intérieur, le loquet (530) comprenant un ressort pour faire passer le loquet (530) de la configuration ouverte à la configuration fermée.

3. Dispositif de fixation d'accessoires (100) selon revendication 1, dans lequel la barre à ressort (110) comprend en outre un cran surélevé (312) disposé sur une surface extérieure de la barre à ressort (110), le cran surélevé (312) étant positionné à proximité d'au moins l'une de la première extrémité (112) et de la deuxième extrémité (114) et relié à au moins l'une des première et deuxième pointes enfonçables.

4. Dispositif de fixation d'accessoires (100) selon la revendication 3, dans lequel le boîtier de barre à ressort (120) comprend en outre une fente de guidage (314) configurée pour recevoir le cran en relief (312).

5. Dispositif de fixation d'accessoires (100) selon la revendication 1, comprenant en outre une deuxième broche (1314) positionnée à distance de la première broche (1312) et à proximité de l'extrémité opposée de la barre à ressort (110) par rapport à la première broche (1312), la deuxième broche (1314) étant configurée pour se fixer de manière amovible à la barre à ressort (110) et pivoter sur celle-ci, et pour venir en butée contre le boîtier de barre à ressort (120).

6. Dispositif de fixation d'accessoires (100) selon la revendication 1, dans lequel la charnière (1310) comprend en outre un cadre (1720) fixé à la charnière (1310) et s'étendant à l'opposé de la première broche (1312), le cadre (1720) ayant une face avant, une face arrière et une ouverture contenue par le cadre (1720), au moins l'une des faces avant et arrière comprenant une décoration de surface.

7. Dispositif de fixation d'accessoires (100) selon la revendication 6, dans lequel le cadre (1720) est configuré pour contenir la gaine (1320) dans l'ouverture, et la gaine (1320) est configurée pour recevoir et communiquer avec un dispositif intelligent comportant une face arrière et une face d'interface utilisateur, dans lequel la gaine (1320) est disposée sur au moins l'une de la face arrière et de la face d'interface utilisateur.
